# EUROPEAN PATENT APPLICATION

(11) **EP 4 329 294 A1**
(43) Date of publication of application: **28.02.2024**
(21) Application number: 23192117.2
(22) Date of filing: 18.08.2023
(51) Int. Cl.: H04N 7/18, G06T 7/292, G08B 13/196

(54) **CRIME CENTER SYSTEM PROVIDING VIDEO-BASED OBJECT TRACKING USING AN ACTIVE CAMERA AND A 360-DEGREE NEXT-UP CAMERA SET**

(30) Priority: 18.08.2022 US 202217890960
(71) Applicant: Fusus, Inc., Norcross, GA 30092 (US)
(72) Inventor: ROBINSON, David A., Atlanta, 30360 (US); SMITH, Jesse, Cumming, 30040 (US); PROTSMAN, Mason C., Alpharetta, 30009 (US)
(74) Representative: Serjeants LLP

(57) **Abstract**

A crime center system generating a graphical user interface (GUI), which may be map-based, that facilitates efficient following of a moving object across cameras covering a geographic area. The system processes information on a network of cameras to determine the locations the cameras and their orientations. An object-tracking interface is generated by the system that includes an active camera view window presenting video from a camera capturing video of the geographic area that includes the tracked object. The system determines a set of the cameras, based on known locations and orientations, capturing images about the geographic space captured by the active camera. The system generates a "halo" of camera icons in the object-tracking interface around the periphery of the active camera view window, which provides a 360-degree view of available cameras about the active camera's location allowing a user to select a next active camera to efficiently track an object.

## Description

### BACKGROUND

### 1. Field of the Description.

The present description relates, in general, to emergency dispatch systems and processes, and, more particularly, to a crime center system that is cloud-based and configured to provide unique payloads of data and video to emergency dispatch centers and to emergency responders including police department personnel attempting to track a moving vehicle or person (also referred to as an "object" or "tracked object" herein).

### 2. Relevant Background.

A dispatcher is a communications worker who receives and transmits information to coordinate operations of other personnel and vehicles carrying out a service. A number of organizations, including police and fire departments and emergency medical services, use dispatchers to relay information, direct personnel, and coordinate their operations. An emergency dispatcher, also known as a public safety dispatcher or a 9-1-1 dispatcher, receives calls from individuals who require emergency services including police services, firefighting, and emergency medical services.

Once information is obtained from the caller, the dispatcher activates the appropriate services necessary to respond to the nature of the call for help. The dispatcher also obtains and relays pertinent information to the field units to help ensure the adequacy and safety of the response, and, in the process, the dispatcher is generating a dispatcher incident narrative that may later be reviewed. Emergency dispatchers may also use preapproved protocols to talk a caller or bystander through lifesaving medical procedures such as cardiopulmonary resuscitation, childbirth, and first aid.

Presently, law enforcement and other agencies rely heavily upon the skill and experience of the human dispatcher to quickly analyze each call for assistance and to respond correctly and quickly to dispatch proper personnel and equipment for each incident. The responding personnel (i.e., "responders" or "dispatched personnel") may, in some cases, be provided or call up a map of the location of the incident, but, otherwise, they often are only provided information obtained by the dispatcher who took the call. As a result, most responders have to approach the incident scene with an often-inadequate amount of information about the incident, which can result in unsafe situations for the responders and for the people involved in the incident.

In law enforcement and other settings, the incident may involve identifying a particular vehicle or person in video provided to the dispatch system or the dispatcher using the dispatch system. To provide responder needed information, it is important to identify the current location of the vehicle or person (i.e., a "tracked object" or simply an "object") and also to track its movement over time. For example, a vehicle may be suspected of being used by a person who has fled a scene of a crime, and it is desirable to not only identify the vehicle or tracked object but to also follow it as it moves away from the crime scene to allow responders to follow and intercept the vehicle.

Unfortunately, tracking a moving vehicle or person across a network of cameras in a geographic area can be very difficult using current technology. A grid-based view that simultaneously shows multiple live camera feeds is typically employed to try to address the need to track a moving object. However, live camera grids demand extended human attention as the dispatcher or other user attempts to concurrently monitor all the video for the object. This severely limits effective detection due to directed attention fatigue and other factors. Hence, there remains a need for an improved method of tracking a moving object such as a fleeing vehicle or person across a geographic area or space that is covered by a network of video cameras. Preferably, the new method would be useful within a crime center system for use by dispatchers and other personnel as well as, in some cases, responders such as police in the field, both on foot and in vehicles.

### SUMMARY

The present description provides a cloud-based digital media payload dispatch system that is configured to support both emergency dispatchers and emergency responders responding to an incident requiring assistance. The new dispatch system is "cloud-based" in that it provides a central hub or repository for gathering live video streams and data streams that are processed to fuse them together to provide a map-based interface for the dispatcher to access via a desktop or other computing station at a central agency location and for the responders in the field to access via vehicle-mounted or portable client devices. The dispatch system processes the video and data streams to generate a dispatch directed payload that includes data and video relevant to the identified incident and that can be readily communicated (due to its reduced or controlled size) to and utilized by field responders to make their response more effective and to increase both the safety of the responders and those involved in the incident.

The cloud-based dispatch system is designed to address problems with prior dispatching systems including fragmentation, lack of access, inefficiency, and affordability. With regard to fragmentation, the dispatch directed payload is configured to pull together previously disparate and fragmented data streams and to fuse or combine them into a coherent picture that can be used by real-time emergency centers (e.g., by center personnel such as dispatchers) and responders in the field (e.g., by police officers) to respond more efficiently. The dispatch system addresses lack of access by unlocking previously inaccessible resources such as private camera streams and non-edge devices (with "edge devices" being those providing an entry point into enterprise or service provider core networks such as those of a metropolitan city or agency network) and integrates their outputs into the dispatch directed payload provided in the map-based interface. With regard to inefficiency, the dispatch directed payload is enhanced with richer data, which improves response times and enables the user (e.g., a first responder) to gain a degree of situational awareness that was not possible with prior solutions. As to affordability, the dispatch system has developed and deployed technology in a new way so as to radically reduce costs of implementation, and it represents a significant step forward for cloud-based public safety technology.

Unlike traditionally federated or fused video and Internet of Things (IoT) systems, the new dispatch system does not require an expensive hardware overhaul in order to function. This means that a law enforcement or other emergency response agency can deploy more functionality in less time and at a much lower cost. The interface and data delivery provided by the new dispatch system represent a redesign of law enforcement (or other incident response) information delivery systems as the system effectively combines multiple streams of video and data into a cohesive whole, thereby creating greater efficiencies at scale. Artificial intelligence (AI) algorithms can be implemented within the dispatch system to enable video and data to be analyzed faster and/or to create automation that was not previously available.

With regard to the problem of tracking a moving obj ect across a network of cameras, the emergency dispatch system (or crime center system) is configured such that the delivered payload and generated graphical user interface (GUIs), which may be map-based, facilitate efficient following of a moving object across cameras covering a geographic area. Particularly, the system processes the received information on the network of cameras to determine the locations of all the cameras and also their orientations. An object-tracking interface is generated by the system that includes an active or current camera view (or viewing window) presenting video from a camera determined or selected as capturing video of the geographic area that includes the tracked object. A current direction of travel is determined by the system for the tracked object, and the system also determines a set of the cameras (a halo camera set or a peripheral camera set), based on known locations and orientations, that are capturing images of the geographic space about the geographic space captured by the active camera along with a subset of these cameras that are in the direction of travel so are "next up" cameras for selection.

Since the system receives and stores (or "knows") the location of all cameras and their orientations, the system can be configured to generate a "halo" of camera icons in the object- tracking interface around the periphery or outer edge of the active camera view window, which provides a 360-degree view of available cameras about the current or active camera's location. The icons are placed based on their geographic location relative to the active camera's geographic location to show the direction in which the other local cameras exist. This enables the user (e.g., a dispatcher or responder) to follow a vehicle or other tracked moving object across cameras by essentially chasing them across a map. For example, when a tracked vehicle leaves an existing camera view to the "top right" of the view window, the user can click (or otherwise select with user input) the camera icon located in the "halo" or peripheral region about the view window that is located outside and adjacent the view window to the "top right." The system will respond by loading a secondary camera in the direction of travel of the tracked vehicle, from the halo or peripheral camera set associated with the icon, as the new active camera and show its captured video in the view window. In this manner, the crime center system is configured to enable the user to efficiently track a moving object such as a vehicle or person traveling on foot through a geographic area such as streets of a city.

More particularly, a crime center system is provided with a dispatch processing hub, which is communicatively linked via a communications network with a plurality of client devices and a plurality of cameras. The system includes, on the dispatch processing hub, an interface generator generating an object-tracking interface for display upon a display device of each of the client devices. The object-tracking interface is configured to include: (a) an active camera view window displaying video from a first one of the cameras designated as a first active camera, the video including an image of a tracked object; and (b) a peripheral region extending about an outer edge of the active camera view window, the peripheral region including icons each associated with one of the cameras in a peripheral camera set and the cameras in the peripheral camera set each having a physical location within a predefined distance from a physical location of the first active camera. During system operations, the interface generator responds to user input selecting one of the icons as a second active camera by updating the object-tracking interface to display video from the camera in the peripheral camera set associated with the selected one of the icons in the active camera view window.

The camera icons are positioned in the peripheral region to provide an indication of the physical locations of the cameras associated with the icons relative to the physical location of the first active camera (e.g., a camera located to the north of the active camera may be provided above the view window while a camera to the east may be provided to the left of the view window and so on). In response to the user input, the interface generator may be configured to modify the peripheral camera set to include a subset of the cameras within the predefined distance from a physical location of the second active camera. In addition to the relative location criteria, the cameras in the peripheral camera set each may be selected to have an orientation determined by the interface generator to provide a field of view useful in capturing images of the tracked object at a time when the tracked object travels out of view of the first active camera.

The system further includes one or more software mechanisms or modules for determining a direction of travel of the tracked object, and the object-tracking interface may include a map-based portion centered at the physical location of the first active camera and displaying user-selectable icons associated with a subset of the cameras determined to have physical locations along a route defined by the direction of travel. In these or other cases, the system further includes one or more software mechanisms or modules for determining a direction of travel and a speed of the tracked object and for determining a time when the tracked object will arrive at the secondary camera from the first active camera based on the direction of travel and the speed of the tracked object. In such cases, the object-tracking interface may include a countdown clock providing an indicator of the time. The clock may provide a countdown of how much time remains until the tracked object may appear on another camera, based on its original location, calculated velocity, and distance of nearby cameras where it may appear.

In some preferred embodiments of the system, the object-tracking interface includes a reacquisition portion displaying identifiers of one or more of the cameras that have feeds with an object providing a potential match to the tracked object. To this end, the system may include an object identification mechanism or module that is configured such that the one or more of the cameras associated with these displayed identifiers (which may be still images from their feeds with the likely matching object) are determined by the AI-based tracked object reacquisition module in the system via processing the feeds of cameras nearby the active camera (e.g., those in the peripheral camera set or the like) using AI-driven meta attributes associated with the tracked object to determine potential matches.

A crime center system is also provided, which comprises a dispatch processing hub communicatively linked via a communications network with a plurality of client devices and a plurality of cameras; on the dispatch processing hub, an interface generator generating an object-tracking interface for display upon a display device of each of the client devices ; and one or more mechanisms for determining a direction of travel of a tracked object, wherein the object-tracking interface includes a map-based portion centered at the physical location of an active camera and displaying icons associated with a subset of the cameras determined to have physical locations along a route defined by the direction of travel and wherein the icons, when selected, cause the interface generator to make a camera associated with the selected icon the active camera and to modify the map-based portion to be re-centered at a physical location associated with the camera associated with the selected icon.

### BRIEF DESCRIPTION OF THE DRAWINGS

Fig. 1 is a functional block diagram of a cloud-based crime center system configured for providing dispatch directed digital media payloads and for generating object tracking interfaces allowing efficient camera selection according to the present description;
Fig. 2 is an exemplary method of generating and distributing a dispatch payload such as may be implemented during operation of the system of Fig. 1;
Fig. 3 illustrates an exemplary map-based user interface generated and presented to a dispatcher during operations of the system of Fig. 1;
Fig. 4 illustrates an exemplary map (or image)-based user interface generated and presented to a responder during operations of the system of Fig. 1;
Figs. 5 and 6 illustrate an exemplary object-tracking interface generated and presented to a dispatcher or responder during operations of the system of Fig. 1; and
Fig. 7 is a flow diagram of an object-tracking method of the present description such as may be implemented during operations of the system of Fig. 1 in providing the object-tracking interfaces of Figs. 5 and 6.

### DETAILED DESCRIPTION

In brief, embodiments described herein are directed toward a new cloud-based real-time crime center solution with a digital media enriched dispatch or crime center system. The dispatch system was developed by the inventors to enable law enforcement and public safety agencies to operate more efficiently with improved operational intelligence and with a proactive emphasis on officer (or "responder"), citizen, and community safety. The dispatch system, when used by law enforcement agencies, may be considered a real-time crime center in the cloud platform.

The following description begins with a detailed discussion of the dispatch or crime center system and its many components and functions, with emphasis on efficiently gathering networked data and generating and delivering data payloads. These payloads include data related to video cameras including their geographic/physical location as well as their orientation. The description will then proceed with more specifically explaining how the new crime center system is particularly configured to facilitate real time tracking of moving objects such as a suspect fleeing on foot or in a vehicle across a geographic area covered by a network of video cameras.

In brief, the system generates an object-tracking interface that can be presented to a dispatcher or a responder. The interface is configured to include a main view or active camera window with a feed from an active camera that is presently capturing images of the tracked object, with AI being used in some cases to initially locate the object in a plurality of camera feeds. The system uses the current location of the tracked object and/or the active camera (and its orientation) to determine a set of peripheral or halo cameras, from the whole set of available network cameras, that are located and oriented properly to capture images of geographic areas in the areas surrounding the geographic space captured by the active camera (or using the physical location of the active camera itself). In other words, the system looks in 360-degrees about the space or camera location to find other potentially useful camera feeds.

The peripheral camera set is used to generate a set of camera icons that are displayed in the halo or peripheral region or edge about the active camera view window in the object-tracking interface, with each icon being placed in a location that is spatially related to the corresponding camera's location relative to the active camera (e.g., a camera north of the active camera would have its icon positioned above the active camera view window while a camera located southwest of the active camera would have its icon positioned to the lower left portion of the peripheral region). The user of the interface may provide user input (a mouse click, screen touch, or the like) to select one of these peripheral cameras to make it the new active camera such as when the tracked object moves out of the active camera view window in a direction corresponding with the location of the selected camera icon. With the selection of the new active camera, the system generates a new or updated set of peripheral cameras that are located and properly oriented to capture geographic areas located 360-degrees about the new active camera, and the interface is updated with icons associated with the cameras in the new or updated set of peripheral cameras. In this manner, the user can chase or follow a moving object with the cameras and always be provided a set of "next-up" cameras to use to continue to capture images of the object.

In more general terms, the dispatch system operates to extract and unify live video and data feeds from virtually any source. In this manner, the dispatch system creates or includes a central hub that enhances the situational awareness and investigative capabilities of law enforcement and public safety agencies. The dispatch system is adapted to bring all personnel and emergency operations centers under a unified umbrella that aggregates video and data, such as with computer- aided dispatch (CAD) or other mapping systems and software, to facilitate easier tracking of personnel and incidents in a map-based interface. Digital evidence, relating to an incident to which response was provided, may be stored in a secure digital vault (which may be configured to be Criminal Justice Information Services (CTIS) compliant) that can then be made accessible to investigators.

The video sources of the dispatch system may include feeds from a camera on a drone, a traffic camera, a private cellphone or smartphone (or other similar computing and/or communication device), a building security camera, a camera on a bomb disposal or response robot, and the like. The dispatch system can extract the live video feed and send it to an emergency operations center and to responders in the field. The dispatch system combines video with other utilities like real-time officer/responder geolocator feeds, a registry map of public and private cameras in a region associated with an incident, a multi-media tips line for the public, and a digital evidence vault for investigators.

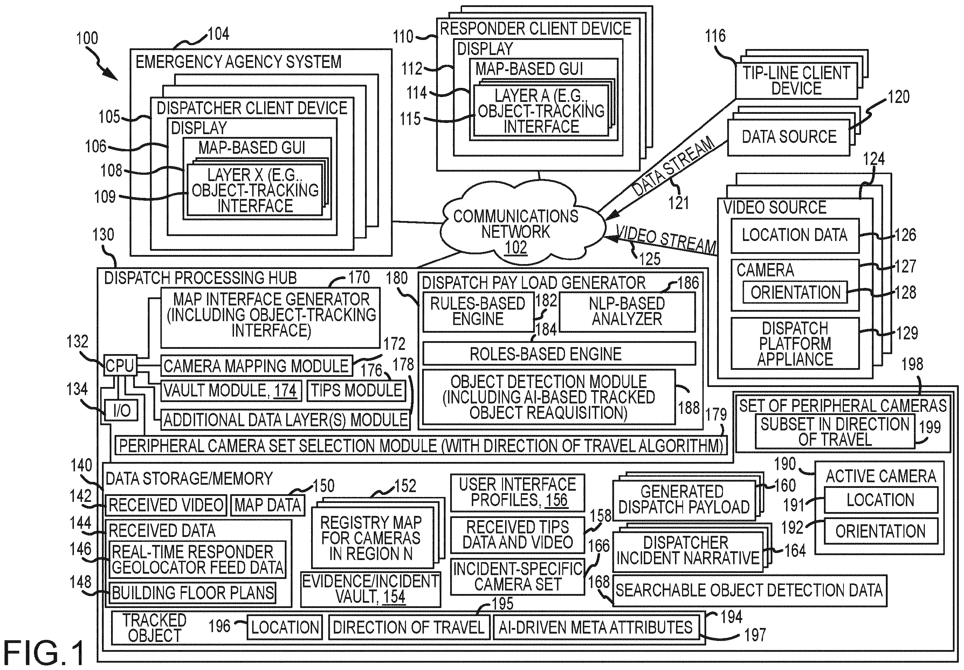

Figure 1 is a functional block diagram of an emergency dispatch or crime center system 100 of the present description. The crime center system 100 is generally made up of a dispatch processing hub 130 that serves combinations of video and data (or a dispatch directed payload) via a map-based interface. In particular, the hub 130 is shown to be linked (e.g., for digital communications), via digital communications network 102, to an emergency agency system 104 (one shown but two, three, or more may be included in system 100), a plurality of responder client devices 110, a plurality of tip-line client devices 116, data sources 120, and video sources 124. The dispatch processing hub 130 is cloud-based (e.g., a Software as a Service (SaaS) platform or the like) so that it is accessible from any Internet-connected computer device or cell or smartphone.

In this regard, the emergency agency system 104 may include one or more dispatcher client devices 105 that may take the form of nearly any computing device that may communicate directly or indirectly with the hub 130 over the network 102 and may take the form of a desktop or portable computer. The device 105 includes a display (e.g., a touchscreen or monitor screen) 106 that is operable to display or present, to an operator who may be acting as a dispatcher, a map-based graphical user interface (GUI) 108 with one or more data and/or video layers 109 generated and transmitted by the hub 130 during operations of the system 100. Similarly, responders/officers may operate responder client device 110 that may be vehicle-mounted or handheld/portable computing or communication devices such as tablets, computer pads, smartphones, and the like adapted for digital, wireless communications over the network 102 with the hub 130. Each responder client device 110 will include a display device 112 operable to display a map-based GUI 114 with one or more layers 115 of video, data, or combinations thereof generated and transmitted by the hub 130. The layers 109, 115 may take the form of an object-tracking interface as discussed in further detail below for use in viewing video containing a tracked object and selecting "next-up" cameras to continue viewing the object when it leaves the field of view of the presently active camera. Further, members of the public may operate tip-line client devices 116 to access the hub 130 to provide tips that may include data and/or video (which is stored at the hub 130 as shown at 158 in memory/data storage 140, which may be located on any cloud-based device at or accessible by the hub 130).

The hub 130 may take the form of one-to-many computing and data storage devices that are cloud-based or accessible via the Internet or other communications network 102. For ease of explanation, though, the hub 130 is shown to include a processor 132 that manages input/output (I/O) devices 134 that may be used to facilitate receipt and transmittal of communications over the network 102 to and/or from the system 104, the responder client devices 110, the tip-line client devices 116, the data sources 120, and the video sources 124. The processor 132 further manages storage and retrieval of information to data storage/memory 140, which may be any data storage device such as a server accessible directly or over the network 102 by the processor 132. The hub 130 performs numerous functions, and, to this end, the processor 132 executes code or instructions (or software, applications, and the like) to provide the functionality (which is described below) of a map interface generator 170 (which is configured, in part, to generate the object-tracking interface described herein that may be provided as layers 109, 115), a camera mapping module 172, a vault module 174, a tips module 176, an additional data layer(s) module 178, a peripheral or halo camera set selection/generation module 179 (configured, in some cases, with a module or algorithm for determining a direction of travel (DOT) of a tracked object), and a dispatch payload generator 180, which includes or accesses/uses a rules-based engine 182, a roles-based engine 184, a natural language processing (NLP)-based analyzer 186, and an object detection module 188 (which may include a routine or algorithm for performing AI-based reacquisition of a tracked object).

Significantly, the dispatch processing hub 130 receives a data stream 121 from one-to-many data sources 120, and the hub 130 (such as via operations of the map interface generator 170) acts to process and store the data 144 in memory 140. The data stream 121 may include real-time responder geolocator feed data 146 providing present locations of responders for the agency running system 104 as well as other information that may be useful to respond to an incident such as building floor plans 148 for buildings in a region(s) served by the emergency agency system 104. The received (or retrieved) data 121 from sources 120 may also include graphical and/or image- based data, as shown at 150 in memory 140, for generating maps and/or map-based interfaces 108, 114 by map interface generator 170.

The video sources 124 may take a variety of forms such as drones, traffic cameras, private cell phone video, building security cameras, responder-utilized robots with cameras, and so on. Each source may provide a video stream 125 that may be stored in memory 140 as received video 142. The records associated with the received video 142 may include location data 126 for the source 124, and the video source 124 may include a video camera 127 having a fixed or changeable orientation 128, which may be provided for each camera as part of or separately from the video stream 125. A dispatch platform appliance 129 may be provided at some or all of the video sources 124 to facilitate the communication of the video stream 125 to the hub 130. In some cases, the appliance 129 is a hardware device **that** is small, lightweight, and configured to be a plug-and-play device that connects to the camera 127 (or to a network to which the source 124 is linked and/or accessible) so as to bring the video sources 124 into the system 100 (or into the cloud to which the hub 130 is associated with).

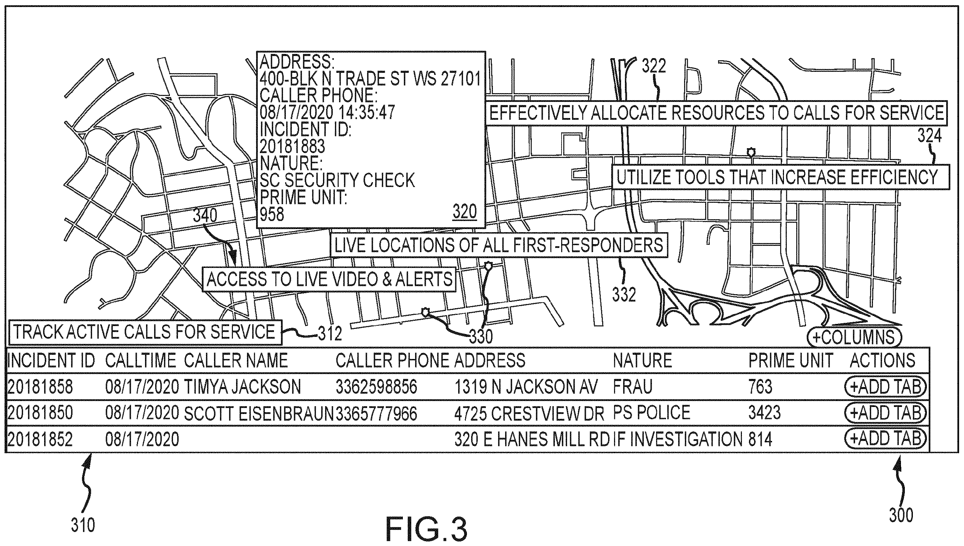

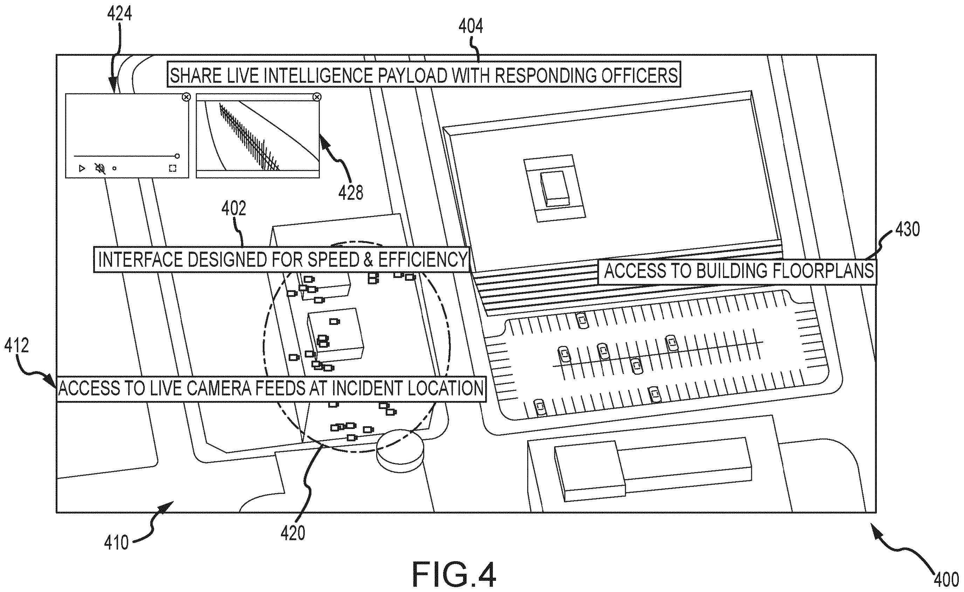

At this point in the description, it may be useful to provide further detail of some of the major components of system 100 including their functions to provide the map-based GUIs 108 and 114 to dispatcher/agency personnel (operators of devices 105) and to responder/field personnel (operators of devices 110), respectively. The map interface generator 170 provides this primary maps interface 108, 114 to the processing hub 130, and the interface 108, 114 is primarily designed to be a real-time situational awareness interface that displays real-time information in a variety of configurations (as seen in Figures 3 and 4). The interface generator 170 pulls in real-time data, such as video 142 and received data 144 from a variety of sources 120, 124 and displays it in a map- based format based on map data 150. Primary users of the interfaces 108, 114 provided by interface generator 170 may be real-time crime center personnel and 9-1-1 operators using the devices 105 and officers, emergency responders, SWAT leaders, event and incidence response coordinators, and the like using the devices 110, who will use the interfaces 108 and 114 to direct unfolding situations.

Views of these interfaces 108, 114 are configurable by the generator 170 based on default or user-modified interface profiles 156, which can be used by users to cause the generator 170 to bring in various video elements 142 and data elements 144 as needed to support their roles in incident response (and which may be provided in user-selectable or default data/video set layers 109, 115, which may be generated by an additional data layer module 178). For example, a 9-1-1 operator will likely use a high-level view via their GUI 108 involving potential incident identification based on the triangulation of weapon discharges detected using previously deployed microphone arrays (e.g., ShotSpotter (or other gunshot detection software/systems) that detects and conveys the latitude and longitude of gunfire or other weapon fire using acoustic sensors may be used to trigger the system 100 by a gunfire detection alert to turn on and record live (or pre-buffered) video from all connected cameras within a predefined radius of the detected shot), real-time video of situations, and/or office/responder geolocations 146. In contrast, a SWAT leader may use their GUI 114 on their client device 110 to provide zoomed-in map data 150 and detail-oriented configurations set by their profiles 156 and/or by field interactions such that the interface 114 may include floor plans 148 of buildings in the map-based GUI 114 (e.g., in a geographic region for an incident), real-time video 142, and teams (e.g., of available responders as may be defined by one of the data sources 120 and with locations provided via geolocator data 146 from the same or other data source 120). The user interface profile 156 may be added to by the users building upon, in many cases, a default or preconfigured profile (e.g., one for GUI 108 and one for GUI 114 to suit the planned users of the system 100).

The vault module 174 is included in the system 100 to support effective evidence collection and review by investigators both during the investigation of the incident and after the incident has been resolved. The module 174 generates and stores data collected for and transmitted to system users via interfaces 108 and 114 in an evidence vault 154, which is incident specific and which may be CJIS compliant for digital evidence. The vault 154 provides a data management system that collects all pictures, videos, and data related to an incident, and this collected incident information/evidence may be added to a particular incident (which is assigned a unique identifier) folder. The stored information/evidence may be tagged with the incident number/identifier and may include all metadata associated with each piece of information/evidence. The vault information/evidence may include portions of received tips data and video 158 received by the hub 130 from tip-line client devices 116 that are relevant to the incident and video collected 142 from video sources 124 related to the incident (e.g., via dispatch platform appliances 129, shown or accessed by operators in interfaces 108, 114, and manually from any video/still cameras in registry map 152).

The camera mapping module 172 is a cloud-based public camera mapping software that produces a registry map 152 for cameras in various geographic regions. The module 172 provides a mass-configurable public portal to register security cameras 127 as video sources 124 for the hub 130. The registry map 152 and video received 142 from such cameras 127 can be fed by the map interface generator 170 into the map-based GUIs 108, 114. Users of the map-based GUIs 108, 114 can, during operation of the system 100, request (such as via selection of a camera icon associated with each camera 127 provided at their physical location (e.g., determined from location data 126) in the interface 108, 114) video footage 142 directly from the camera mapping interface 108, 114 and the received (which may only occur in some cases upon request from a user) video 142 may then be filed by the vault module 174 in the vault 154 for evaluation.

The map interface generator 170 may include one or more subroutines or callable applications to create a common operating picture for first responders (i.e., operators of the responder client devices 110 via map-based GUI 114). For example, these subroutine/applications may operate to provide additional data views to video 142 and data 144 and to provide controls that can be stored within a tab in the GUI 114 (or otherwise be initiated or accessed by an operator of the device 110). Users who have access to this tab or initiation interface (e.g., all or a subgroup of the responders such as differing access for leaders than for other members of a team) are able to view additional real-time data sets in the map-based GUI 114 (such as in a differing data layer 115, which may be generated by the additional data layer module 178). The users may also be allowed to configure (and pre-configure via profiles 156) specific map views provided by the map interface generator 170 to better meet their needs. The layers 115 of the interface 114 may provide users of devices 110 with data including teams, call signs, and direct messaging to other personnel accessing the hub 130. To this end, a companion application (not shown in Figure 1) may be provided on the responder client device 110 (e.g., a smartphone or the like) that allows for geolocation of officers in the field to be provided in the interface 114 (e.g., via mapping of geolocator data 146 received at/retrieved by the hub 130). The companion app may also support individual and group messaging and data sharing across the client devices 110 (and/or with client devices 105), and the users of the companion app would be provided access to the map-based GUI 114 and associated data and video via their client device 110.

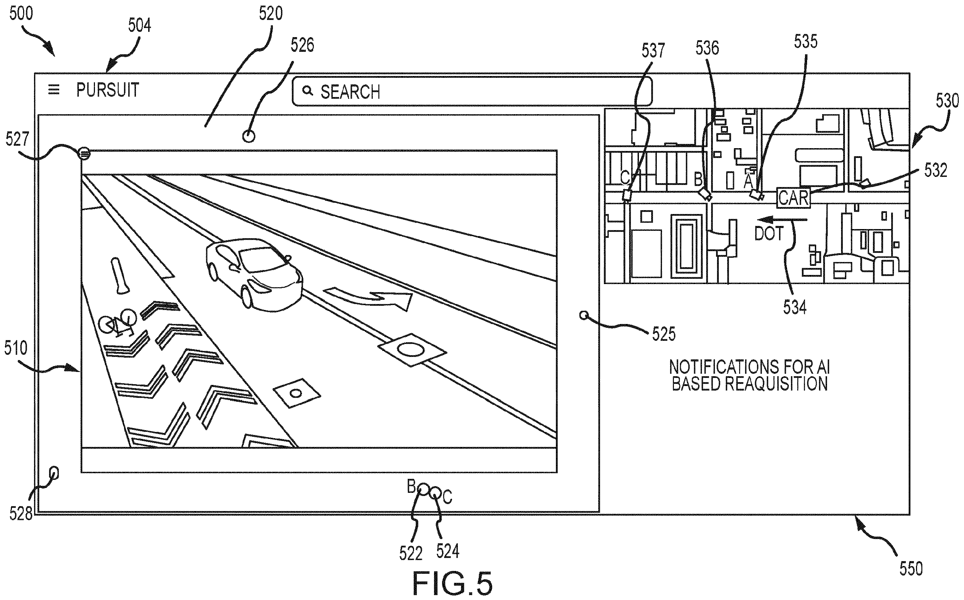

From the base GUI 108, 114, the user may also be able to select a layer 109, 115 that provides an object-tracking interface (see Figure 5, for example) that is generated by the map interface generator 170 via calls to the peripheral camera set selection module 179. During operations of the system 100, an object may be identified in received video 142 that is to be tracked, and data file may be stored for this object in memory 140 as shown at 194. The object may be identified manually by a user/operator of the device 105 or 110 with user input (e.g., selecting an object in an interface or the like) or via the object detection module 188 processing imagery based on user input criteria and/or selection data. The direction of travel 195 may be determined for the tracked object by the module 179 or another module in hub 130 along with its current location 196 and a set of AI-driven meta attributes 197.

Using the location 196 of the tracked object and/or user input or other information, the map interface generator 170 selects an initial active camera among the network of all available cameras 127 and creates a data file 190 identifying the camera and also storing its location 191 and orientation 192 (or providing links to this data) for use in generating the object-tracking interface 109, 115. The peripheral camera set selection module 179 may then operate to identify or select a set of peripheral or halo cameras as shown at 198 based on the location 191 (and in some cases the orientation 192) of the active camera 190 and the location 126 of the available cameras 127. In brief, the module 179 determines which of the cameras 127 is located in a peripheral or edge space surrounding the geographical space captured in the video stream of the active camera. The size of this space (e.g., a 360-degree ring with an inner diameter set by the edge of geographic space captured by the active camera and an outer diameter set to provide a ring thickness or depth of 50 to 1000 feet or more (or to cover 1 to 12 city blocks or some other predefined peripheral or edge space or one that may be varied based on a speed at which the tracked object is traveling with larger sized spaces being useful for faster moving objects and smaller sized spaces useful for slower objects such as person on foot or on a bike or scooter).

As a second selection criteria, the module 179 may also verify that the camera 127 has the proper orientation 128 to have a field of vision to capture images of the tracked object. For example, a camera in a useful location may not be selected for the set of peripheral cameras 198 if it is pointed away from an area of interest. Specifically, if the tracked object 194 is a vehicle, only cameras with orientations 128 useful for capturing streets or spaces where a vehicle may travel would be selected for the set 198 whereas a different set of cameras 198 may be selected when the object is a person on foot (e.g., store video may be useful in such situations and cameras oriented to capture inside spaces may be included in the set of peripheral cameras 198 as the person may travel into such spaces).

The map interface generator 170 generates the object-tracking interface 109, 115 so as to include a main viewing or active camera viewing window that displays the received video stream 142 from the active camera. The interface 109, 115 further includes a set of icons corresponding to the set of peripheral cameras 198, and these icons are provided in a halo or peripheral (or edge) region about the outer border of the active camera viewing window at locations that represent accurate relative spacings between the active camera and the peripheral or halo cameras 198 (e.g., cameras to the west are located along the left edge of the viewing window, cameras to the north along the upper edge, cameras to the east along the right edge, and cameras to the south along the lower edge). The user of the device 105, 110 can select any of these icons to make the corresponding camera 127 the new active camera.

The peripheral camera set selection module 179 may also the direction of travel 195 of the tracked object to process the set of peripheral cameras 198 to determine which of these cameras are located on or proximate to (e.g., some predefined distance away from a vertical plane containing an arrow/line defining the direction of travel) the direction of travel 195. This subset 199 can be provided to the map interface generator 170 for use in a map-based section or portion of the object- tracking interface 109, 115. For example, the map-based section of the interface 109, 115 may provide a map with a centrally-location icon representing the active camera. The direction of travel of the object 194 may be displayed, such as with an arrow leading away from the active camera icon, along with icons corresponding to the cameras in the subset 199 of cameras along the direction of travel 195. The user can select these displayed icons (which typically are also displayed in the peripheral or edge region about the active camera viewing window) to make one of these cameras the active camera or, in some cases, to open up a second camera feed viewing window that can be viewed concurrently with the active camera viewing window.

The object-tracking interface 109, 115 may further be configured to include a tab or button that the user can select to initiate AI-based reacquisition of the tracked object 194 by the module 188. In response, the module 188 may utilize the AI-driven meta attributes 199 as well as other data (such as the last known location 196 and/or direction of travel 195) to process the received video 142 of all or a subset of the cameras 127 to detect the tracked object. When successful, the module 188 may provide a set of one or more camera identifications to the user in the object-tracking interface 109, 115, which they can select and inspect the video 142 from those cameras to verify which if any contain images of the tracked object 194 and to make, when appropriate, one of these cameras the new active camera 190.

The tips module 176 provides a public safety utility or functionality that operates, such as via text message with or a client-based app or on the tip-line client devices 116, which communicate over network 102 with the hub 130 and the module 176. Members of the public can operate their client devices 116 to submit tips, which are stored as shown at 158 in memory 140 by the tips module 176, to the agency associated with the emergency agency system 104 (e.g., a police department) by either texting messages/text, pictures, and/or videos to a publicized number or via a client-based (e.g., smartphone) app running on their client device 116. The tips may be submitted anonymously or have the respondent's identity attached, depending on how the tips module 176 is set up in the system 100. The client-based app may be configured to give the user of the device 116 access to incident (e.g., crime)-related data published by the particular agency. In some embodiments of the system 100, the received tips information 158 may be triaged by one or more of their personnel in response to receiving a new tip alert from the tips module 176 (such as via an update to the map-based GUI 108 on an agency client device 105 created by operations of the map interface generator 170 processing messages from tips module 176). The tips 158, which may be filtered or not by the triage personnel to identify useful or reliable tip information 158, may then be stored as evidence in the incident folder in the vault 154.

The dispatch platform appliances 129 are connected to video sources 124 (such as individual cameras or networks of such cameras) to create a separate secure live video feed 142 to the hub 130. The live video feed is accessed by operators of the client devices 105, 110 via the GUIs 108, 114 in either a map or grid view (which may be selected by an operator of the client devices 105, 110 or be set for their particular role in the dispatch system 100 such as for a dispatcher or field-based responder). The appliances 129 may be equipped with AI at the edge-type code/software. With AI at the edge-type technology, an inexpensive appliance 129 can be plugged into a camera 127 to instantly turn it into a smart, cloud-connected device capable of analyzing data as close as possible to the source.

For example, in some embodiments of system 100, video data is analyzed and processed at the camera 127 or at the source 124, and, based on this processing, a subset of the video or video- based/related data determined to be salient to an incident is moved (as shown with video stream 125) into the cloud for receipt as video 142 for use at the hub 130. This means that cameras 127 that are commercial and consumer grade (or better) from businesses or the like can readily have AI applied to them quickly and affordably, which will vastly increase the number of available intelligence nodes (or video sources 124) for a real-time crime center or other entity employing the emergency agency system 104 and responder client devices 110. This approach or design for system 100 also significantly reduces costs for data servers, additional bandwidth, and infrastructure usually associated with high-volume video collection and analysis.

To support the map interface generator 170, the hub 130 runs a dispatch payload generator 180 (e.g., to provide data and video for populating and for identifying data and video accessible via the interface 108, 114). The payload generator 180 provides a significant enhancement to law enforcement (and other emergency response) information delivery systems and can be thought of as introducing several firsts to the public safety intelligence ecosystem. In this regard, the payload generator 180 is configured to add video intelligence to traditional 9-1-1 call centers by utilizing a rules-based engine 182. During operations of the system, an incident (or 9-1-1) call for service is received (e.g., by agency system 104 which is linked via network 102 to hub 130). The rules-based engine 182 then responds by interpolating or determining based on call-related data and/or previously received data in memory 140: (1) the priority of the call; (2) the assignee or first responder for the call (e.g., based on type of call and/or location of available responders); (3) the location of this first responder relative to the location of the call for service (or location of an incident being reported in call); (4) the responder's mode of receipt of data (e.g., the type of client device 110 they use and/or the specification of the display 112 and/or the user interface profile 156 associated with the responder); and (5) based on the responder's role within the agency receiving the call, the type of information useful for the responder in addressing the incident identified by or associated with the call for service. The rules-based engine 182 is adapted to achieve automated interoperability between multiple systems that may already be in use by the agency implementing the system 104 and client devices 110, which until the present invention were disparate and manually controlled by separate users (e.g., dispatch software, surveillance management software, communications hardware, and iOS and Android mobile devices and PC computing devices). This processing is used, in part, to generate the dispatch payload 160.

To further tailor the payload 160 delivered to the client devices 105, 110 (e.g., in or via interfaces 108, 114), the payload generator 180 includes a roles-based engine 184. The roles-based engine 184 is configured to allow responders (operators of devices 110) to receive information related to calls for service or alerts (such as license plate recognition alerts) that are germane to their role within the agency using the system 100. Such roles may be stored in the user interface profiles 156 or otherwise in data storage accessible by the engine 184. The system 100 may further expedite generation of the payload 160 by the generator 180 through AI in video analysis to identify video (e.g., a subset or portion of all) within the received video 142 or that available via video streams 125 from sources 124 (e.g., surveillance and mobile cameras) and IoT information (e.g., information from gunshot, license plate, and other alert and data gathering systems) related to the call for service in addition to jurisdictional and patrol-zone boundaries applicable to responding resources. This identified additional information may be provided in layers 109, 115 by the additional data layer module 178 and interface generator 170 and/or in payload 160 to client devices 105, 110 to aid the responder with video and IoT intelligence to achieve more agile and proportionate responses to the incident/call for service by the responders.

The combination of the map interface generator 170 and the payload generator 180 provide a number of unique features that make the operation of the system 100 different than prior dispatch solutions. The hub 130 with its dispatch payload generator 180 and map interface generator 170 is the first solution to tie together all data and video sources 120, 124 that may be useful and desired by law enforcement, security, or other emergency response agency and deliver them via a cloud- based platform in real-time to both facilities that manage emergency response (e.g., via interface 108 on client devices 105 in emergency agency system 104) and those in the field who are executing the response (e.g., responders operating the client devices 110 to access and interact with the interface 114).

Further, the hub 130 is configured to enable law enforcement and other responder agencies to easily integrate and aggregate previously hard-to-access sources of video and data among sources 120, 124. These data and video sources 120, 124 may include helicopter, drone, robot, and fixed camera sources (e.g., cameras 127 of video sources 124 providing video streams 125). The integration of these sources 120, 124 into a single unified dispatch payload 160 accessible within a single interface 108 or 114 is unique to the design of system 100. The solution provided during operations of the system 100 is cloud-based and uses existing video and security infrastructure while also, in some embodiments, bringing non-EDGE-based legacy device data into the cloud for analysis (e.g., to be part of data and video streams 121, 125 accessible by the hub 130). Additionally, the methods of rendering the dispatch payload 160 within a map-based interface 108, 114 by the map interface generator 170 (and/or other components of the hub 130) is unique to the design and implementation of the system 100. This uniqueness includes the manner in which the data and video is unified within a map-based interface 108, 114 for usability and efficiency.

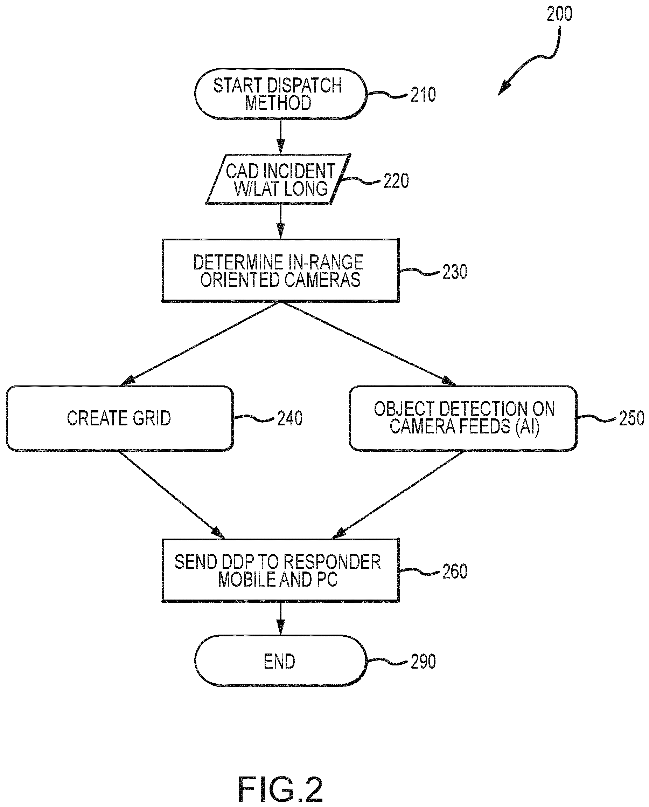

Figure 2 is an exemplary method 200 of generating and distributing a dispatch payload 160 such as may be implemented during operation of the system 100 of Figure 1 by the payload generator 180 (alone or in combination with other modules/subroutines). The method 200 starts at 210 such as with implementing the system 100 by providing the dispatch processing hub 130 on the network 102 and communicatively linking (e.g., via subscription to services provided by the hub 130) the emergency agency system 104 to the hub 130 along with client devices 110 made available to responders associated with the agency running the system 104. Step 210 may also involve achieving a data link with data sources 120 and video sources 124 so as to make them cloud-based (e.g., by providing the dispatch platform appliance on cameras 127 and/or networks of cameras 127).

The method 200 continues at 220 with a call for service being received at the agency system 104 and such call being identified to the hub 130. The dispatch payload generator 180 includes an NLP-based analyzer 186 that acts to perform NLP (and/or other analysis) of the dispatcher call and/or the dispatcher incident narrative of the call, which is stored at 164 in the memory 140. The analysis (and, in some cases, the raw call and narrative) 164 may also be stored in the appropriate folders of the evidence vault 154. The analysis of the call and/or the dispatcher incident narrative in step 220 is used to determine a location (e.g., latitude and longitude) of the incident to which the call is related.

The method 200 continues at 230 with the dispatch payload generator 180 generating an incident-specific camera set 166 from the available cameras 127 (or video sources 124). The cameras 127 determined to be in the set 166 may be public and/or private cameras and may be in the registry map 152 for a geographical region associated with the location of the incident. In some cases, the region or area used to locate useful cameras 127 for the set 166 is defined by the visible range circumference about the incident location (e.g., a predefined maximum range for the highest expected quality camera 127 providing the video streams 125). The set 166 in some cases only includes those cameras 127 with an orientation 128 that would allow that camera 127 to capture some or all of the scene associated with the incident. In some cases, object detection in the feeds 125 is used in step 230 for determining the cameras 127 to include in the set 166, e.g., is a detectable object, such as a particular individual or vehicle, associated with the incident found in the feed 125, and, if so, include that camera 127 in the set 166.

The automated usage of camera orientation 128 allows the payload generator 180 to detect the cameras 127 within the visible range circumference of, and oriented on, the location of the incident. To capture all possibly useful cameras 127 in the set 166, "oriented on" may be defined as some angular offset from the line of focus of the camera 127 (e.g., the line of focus may be plus or minus 30 degrees (or less) from being orthogonal to the location (latitude and longitude, for example) of the incident). The locations of the cameras 127 in the set 166 are indicated via camera icons on the map-based interfaces 108 and/or 114, and the payload 160 may include or allow access to the video streams 125 in the received video 142.

The method 200 continues at 240 with creating a grid of the region about incident location for use by the map interface generator 170 in generating the underlying map imagery for the map- based interfaces 108, 114. At 250, the method 200 includes use of an object detection module 188 of the payload generator 180 in the video streams 125 from the cameras 127 in the set 166. Once applicable cameras 127 for inclusion in the incident-specific set 166 are determined, step 250 involves the module 188 performing object detection using AI-based object detection or the like. This may include performing object detection on the edge-recorded video content 142 from those cameras 127 in the set 166. Further, it may be useful for the module 188 (or generator 180) to be adapted to make the metadata associated with the identified objects and/or video feeds available and searchable as shown at 168 in memory 140 of the hub 130. The identified objects may include one or more objects to be tracked such as a vehicle or a person, and the camera providing the video in which the object was identified may be set as the initial active camera for an object-tracking interface.

Additionally, applicable personnel (e.g., operators of the client devices 105 or 110) may instantiate a bulk request to cameras 127 that are not in the registry map 152 to acquire digital content 125 applicable to the incident. Further, technologies supporting dispatch personnel may be provided in the system 100 to assist in the curation of applicable camera 127 for providing the video feeds 125 and for inclusion in the set 166 used to create the payload 160 for the incident. Viewable grids may be created in step 240 for distribution in the payloads 160 and for viewing in the interface 114 on responder client device 110 by field personnel to address additional tactical challenges of both direct support and surveillance operations.

The method 200 continues at 260 with the dispatch directed payload 160 being sent by the map interface generator 170 to the client devices 110 (mobile computing or communication devices or vehicle-mounted devices (or even desk stations)) over network 102 for viewing or accessing via the map-based GUI 114. The data and/or video of the payload 160 may be viewed in a single layer or multiple layers 115 provided over the map or grid of the geographical area about the incident location. The method 200 then ends at 290.

Figure 3 illustrates an exemplary map-based user interface 300 as may be generated and presented to a dispatcher via the display 106 of their client device 105 during operations of the system 100 of Figure 1. Similarly, Figure 4 illustrates an exemplary map (or image)-based user interface 400 generated and presented to a responder via the display 112 of their client device 110 during operations of the system 100 of Figure 1. Annotation boxes (such as box 312 in Figure 3) are provided in these figures for ease of explanation but, in practice, would not be included in the interfaces 300 and 400.

As shown in Figure 3, the GUI 300 provides a high-level map (e.g., a graphical representation of the geographic area showing streets and street names) of an area monitored and serviced by a particular response agency or by a particular dispatcher of that agency. A subwindow or chart 310 may be provided that, as indicated by annotation box 312, provides a listing of and details of calls for service including an incident ID, a call time, an address/location, and an identifier for a first responder. An active incident box 320 may be displayed over the map details to show the dispatcher details of an incident they are working on to facilitate as indicated with annotation boxes 322 and 324 the effective allocation of resources to calls for service and to assist in use of tools that increase efficiency, which are available via the interface 300 to the dispatcher. The information displayed to the dispatcher may include visual icons 330 representing as shown in annotation box 332 live locations of all first responders available (or status may be shown) to address the incident. The tools further include as shown with button or annotation box 340 access to live video and alerts, e.g., the dispatcher may be able to drill down via the interface 300 to access video streams from cameras in the region especially those associated with a particular incident.

As shown in Figure 4, the GUI 400 provides a low-level map (e.g., a image-based map of the geographic area showing streets and street names) 410 of an area surrounding or involved in a particular incident to which a responder operating a client device displaying the GUI 400 is responding to (e.g., with the center of the image coinciding with the location assigned to the incident). As indicated in annotation box 402, the interface 400 is configured or designed for speed and efficiency in its use by a first responder or responder team leader. Annotation box 404 clarifies that the GUI 400 is useful for sharing a live intelligence payload (e.g., payload 160 of Figure 1) with responding officers (operators of the client devices 110 of Figure 1).

Particularly, the GUI 400 includes a plurality of camera icons 420, and a user of the GUI 400 can select any of these icons 420 (e.g., representing an incident-specific camera set 166 of Figure 1) to obtain a live video stream being captured by a camera at or near the location of the icon on the map 410. This can be seen with window 424 and 428 showing video streams (part of payload 160 of Figure 1) within the map-based GUI 400, such as a layer overlying the map 410 in an area of the GUI 400 that is spaced apart from the location of the incident to retain a clear view of the map information near the incident. Annotation box 412 indicates that the interface 400 provides a user with access to live camera feeds at the incident location (as cameras associated with icons 420 all are orientated to capture portions of the incident scene and are within range of the location of the incident).

Other data from data sources may also be accessed via the interface 400 (e.g., data 144 in Figure 1 may be provided as part of the payload 160 or be accessible via the interface 114 in Figure 1), and annotation box 430 provides the useful example that building floor plans may be accessed via the interface 400 (such as for display in a layer of the GUI 400 or as separate windows displayed in split or whole screen on a display of a client device), e.g., via clicking on an icon or via a menu of action buttons (see upper left portion of GUI 400 for some exemplary actions that may be taken from the GUI 400).

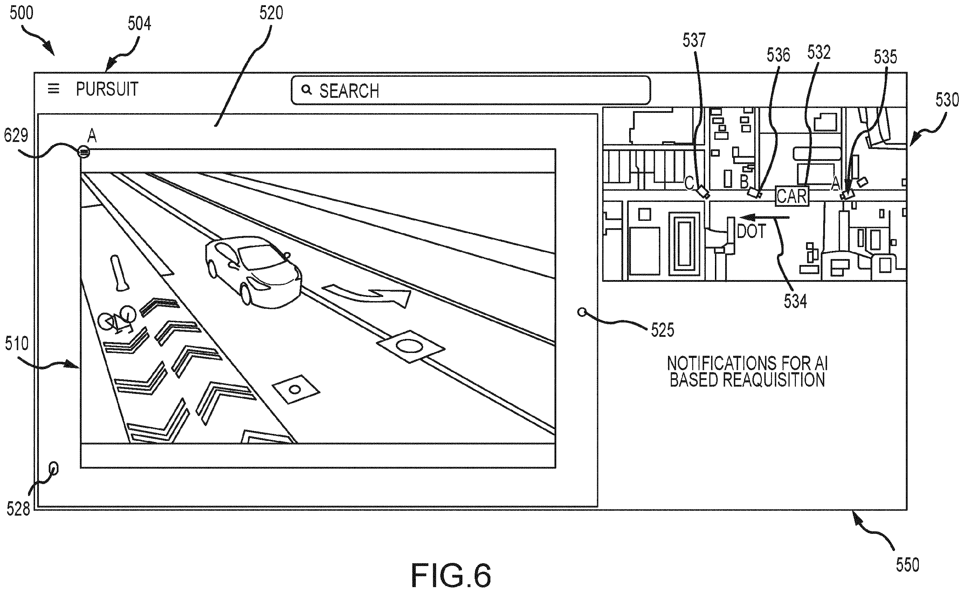

Figures 5 and 6 illustrates a screen shot of an exemplary object-tracking interface 500 generated and presented (e.g., displayed) to a dispatcher or responder on their client devices during operations of the system 100 of Figure 1. As shown with label/header 504, the user has selected a "pursuit" function from the main or base GUI (e.g., GUI 108 or 114 in Figure 1) to activate the object-tracking functions of the system 100 and cause it to generate the interface 500. The interface 500 is generated with an object 516 (e.g., a moving vehicle in this case) having been identified (by the user or by AI of the system 100) and a first active camera ("Camera A") identified as having a feed or video that captures the object 516. The system 100 is configured to generate the interface 500 to include a main view or active camera view window 510 enclosed within a peripheral region or edge 520. The interface 500 further includes a map-based portion or map view 530 and a reacquisition portion 550 that are concurrently displayed with the active camera view window 510, although they may also be collapsed or hidden until requested by the user in some embodiments.

As shown in Figure 5 with interface 500, the user is viewing the video feed from Camera A (or "a first active camera") in window 510, and an icon 535 for Camera A/first active camera is displayed in a center position within the map portion 530 of the interface 500 in the upper right comer of the user's display screen (although the location of components of the interface 500 may be varied to implement the interface 500). In the feed from Camera A, a black sedan or tracked object 516 can be traveling toward the camera. An icon and/or text ("CAR") 532 representing the object/vehicle 516 is also shown in the map portion 530 on the appropriate street of the displayed map moving in a direction of travel (or "DOT") determined by the system 100 and represented by an arrow 534 in the map portion or view 530. With map-based portion 530, the user can quickly verify that the vehicle 516 is traveling west (in this example) toward Camera A/first active camera.

As discussed above, the system 100 is configured to determine a set of halo or peripheral cameras using the location of the active camera or Camera A, in this case, and/or the location of the tracked object 516 (e.g., within map-based portion 530). These cameras are selected based on their location, their disposition (internal or external), and also on their orientation so as to only select cameras with fields of view that may be likely to capture the object 516 as it moves out of the geographic space captured presently by the active camera or Camera A The determination of the peripheral or halo camera set may involve defining a spatial ring or halo around the geographic space captured by the active camera (or about a circle with a center at the active camera location and with a predefined diameter associated with the range of the camera). Cameras within this spatial ring may be considered by the system for inclusion in the peripheral or halo set. A second criteria may then be applied to determine whether each camera has an orientation that is useful for capturing the tracked vehicle, e.g., is the camera directed toward a street view or similar queries. If "yes," the cameras will be included in the peripheral or halo set and user-selectable icons representing these cameras and their locations relative to the active camera's location will be presented in the interface 500.

Specifically, in the example illustrated in Figure 5, the map-based portion or view 530 shows the vehicle 532 with a westerly DOT 534 toward Camera A or the first active camera 535. Icons 536 and 537 are also provided in the map-based portion or view 530 and represent Cameras B and C, respectively, that are part of the system-determined peripheral or halo camera set. In the map-based portion 530 of the interface 500, the user/viewer can see that Camera B and Camera C, via the icons 536, 537, are further to the west along the route of travel 534 such that they may be useful to select as a next-up active camera to replace Camera A if the vehicle continues along its present course.

The system 100 is also configured to provide icons representing all (or a subset) of the cameras in the peripheral or halo set in the peripheral or edge region 520 of the interface. With the current DOT of the vehicle 516 shown in the video from Camera A shown in window 510, icons 522 and 524 representing Cameras Band Care shown in the peripheral region 520 below and to the right, which places them directly in the path of the moving vehicle 516 in the video in active camera view window 510. Other cameras are represented spatially relative to the location of Camera A/the first active camera in the peripheral region as shown with icons 525, 526, 527, and 528, and these may be selected by a user/viewer (e.g., a responder or dispatcher) as next active cameras if the vehicle 516 were to change its direction of travel toward any of these cameras' locations and fields of view. Icons B and C (labeled 522 and 524) are clickable camera indicators that show the direction in which cameras exist in relation to the current camera view. In other words, there are two cameras, represented by icons 522/536, 524/537, in the direction of travel 534 of the black sedan 516 that can be clicked (or otherwise user selected). In response, the system will load the feed or video from the selected camera into the active camera view window 510.

Figure 6 illustrates an updated interface 500 after a user has selected Camera B to be the new active camera. When the user clicks one of the icons 522 or 536 associated with or corresponding to Camera B, the system 100 acts to load the feed for Camera B into the main video area or active camera view window 510. Additionally, the system 100 updates the object-tracking interface 500 as shown in Figure 6 such that the map-based portion or map view 530 is centered on Camera B or the second active camera as shown with icon 536 now being in the center of the map view 530. The locations of the Camera A and C icons 535 and 537 are moved in the map-based portion or view 530 (and, in some embodiments, the Camera A icon is deleted as it is no longer on the path of the vehicle in the DOT 534).

In the peripheral or edge region 520, the Camera B icon 522 is deleted with it becoming the new active camera, and the Camera C icon 524 may be moved to reflect its relative spatial position to Camera B (or its captured geographic area). Camera A may be added to the peripheral camera set by the system 100, and an icon 629 may be inserted into the peripheral or edge region 520 in the interface 500 to show that it is available as a next-up camera to track the object 516 (e.g., if the vehicle were to do a U-turn and return in a DOT toward the Camera A location). As shown with the interface 500 in Figures 5 and 6, the operations of the system 100 with its map interface generator 170 allows a user to follow a suspect vehicle or other moving object 516 based on the object's direction of travel.

Further, the interface 500 is shown to include a reacquisition portion or view 550. The user of the interface 500 may select a button or tab (or the like) in this portion/view 550 to initiate a reacquisition of the vehicle 516 ifit moves out of view of the active camera view 510. This may be useful if the vehicle or other object 516 abruptly changes its direction of travel (or moves off the course predicted by the system 100 based on the present DOT 534). In preparation for reacquisition, the system 100 of Figure 1 is configured to gather AI-driven meta attributes on each identified and tracked object 516 (such as for the black sedan shown in Figures 5 and 6). These attributes may include: object type, car color, vehicle type, gender, clothing (e.g., wearing a hat), top color, bottom color, and held/worn accessories (e.g., is carrying a bag, is wearing a backpack, and the like).

When reacquisition is requested, the system 100 acts to search all camera feeds in the area (e.g., in the peripheral set and then in 360-degrees outward from the peripheral ring/band) using these attributes in order to identify the tracked object 516 when it departs from the predicted track/path. The user may be notified of potential reacquisition (or "success" in identifying the object 516 in another feed) in the region 550, such as with non-viewed camera feeds. When any of these feeds (or a button/thumbnail or the like associated with a possible new active camera) are clicked, the system 100 loads the feed of the camera, e.g., into the active camera view window 510, where the match was detected and at the point in time where that detection occurred. The user can then quickly identify the tracked object 516 again or reject the potential match as being incorrect (and request the reacquisition to continue).

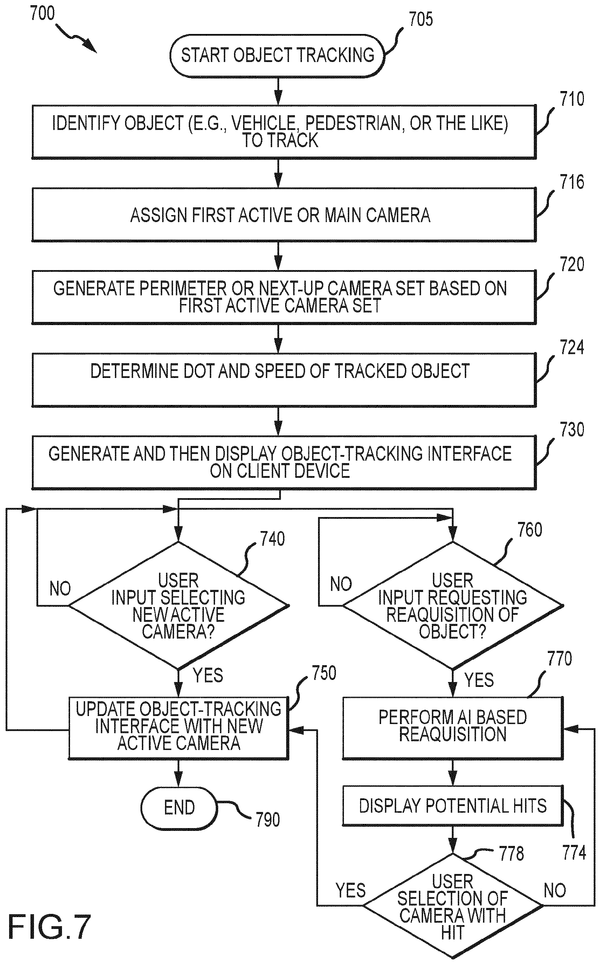

Figure 7 is a flow diagram of an object-tracking method 700 of the present description such as may be implemented during operations of the system 100 of Figure 1 in providing the object-tracking interface 500 of Figures 5 and 6. The method 700 starts at 705 such as with configuring a dispatch or crime center system with interface generation software and AI-based processing programs as discussed above with reference to Figure 1 to process feeds from a network of video cameras to track a moving object across a geographic space such as the streets of a city or the like.

The method 700 continues at 710 with identifying an object, such as a vehicle, a pedestrian, or the like, to track. Step 710 may involve a user/operator of a client device in a crime center system interacting with a map-based interface to observe video streams and to select a vehicle, a pedestrian, or the like in one of these feeds and then to select a "pursuit" or other tab/button to initiate object-tracking functions of the system. The method 700 continues at 716 with assigning or designating one of the video cameras in the network of cameras as the first active or main camera, with this selection typically being in response to user input selecting a feed from a camera that presently is capturing the object identified for tracking in step 710. In response, the system may act to retrieve the location and other data for this camera such as its orientation, and this data allows the system to determine the geographic space or area captured by this camera in its video feed, which includes the tracked object.

In step 720, the method 700 includes generating a perimeter or next-up camera set from the networked cameras available to the crime center system. Cameras are selected for this set based at least upon their physical location relative to the location of the first active or main camera and whether this location is in a ring or band about either the physical location of the active camera or about the edge or perimeter of the geographic space it captures with its video (which may be based on a range of the active camera or a default range for all network cameras). The perimeter set typically will include cameras that are located in any direction from the active camera or to provide a 360-degree sweep of potentially useful next-up cameras as the tracked object may, in some cases, move in nearly any direction from its presently tracked location. Once physical location is considered, the peripheral set of cameras may further be reduced it step 720 in size to only include cameras with orientations that are useful in capturing images of the tracked object. If the object is a vehicle, cameras are included in the peripheral set only if they have fields of view that capture streets and other surfaces where vehicles will travel (e.g., are not directed to a rooftop or inside of building). If the object is a pedestrian, the orientations that may be useful are more inclusive and will include most orientations of cameras as pedestrians are not as restricted in their travel routes.

The method 700 continues at 724 (which may be completed concurrently with step 720) with determining the direction of travel **(DOT)** and speed of the object being tracked. Then, at step 730, the method 700 includes generating and displaying on a client device an object-tracking interface. This interface includes a main or active camera view that provides the video feed from the first active or main camera from step 716. The interface further includes a peripheral or edge region about the periphery (or abutting the edge) of the active camera view in which icons are provided of each of the peripheral cameras from step 720 in a location chosen to provide a relative location of these cameras to the first active camera's location. Each of these icons is selectable by the user via operations of the client device to make any of these cameras the second or next active camera when the tracked object moves in the direction of one of these cameras.

The interface may further include a map-based portion that shows a map that includes the geographic space captured by the active camera as well as surrounding areas, and this map may be centered at the physical location of the active camera. The map-based portion may also include text or an icon representing the tracked object along with an indicator of its direction of travel as determined in step 724. Further, this interface may include icons associated with or corresponding to a subset of the peripheral cameras that are determined by the system to be along a future route of the tracked object if it continues to follow its present direction of travel. Again, these camera icons of this DOT-based route camera set are selectable in the interface by the user to make them the second or next active camera.

The method 700 then continues at 740 with monitoring the interface for receipt of user input (a mouse click, a touch on a touchscreen, or the like) indicating the selection of one of the cameras in the peripheral set of cameras in the main view or in the map-based portion to be the second or new active camera. For example, a user may observe the tracked object moving or about to move out of the range or the video feed from the present active camera and respond by selecting an icon associated with a camera that is in the direction of travel and also spatially close to the present active camera's location (as indicated by the icon's positioning in the interface). If no selection, the method 700 continues at 740.

If user input is received/detected at 740, the method 700 continues at 750 with the system acting to update (or regenerate) the object-tracking interface with the first active camera being replaced with the next or second active camera. The second active camera's feed is provided in the active camera view window, the peripheral region is updated to delete the icon for the selected camera and to add the prior active camera in its proper spatial position, and the map-based portion is recentered at the location of the second or new active camera and icons of cameras along the path/route of the current **DOT** are updated. Note, steps 720 and 724 (or a portion of these steps) are performed as part of updating the interface in step 750, the **DOT** and speed being recalculated on an ongoing basis in many embodiments. The method 700 may end now at step 790 or continue at 740.

Concurrent with steps 740 and 750, the method 700 may include monitoring for user input requesting that reacquisition be performed for the tracked object. This may be useful when a vehicle quickly changes direction and/or moves into a zone not covered by cameras such that its no longer tracked by an active camera. In such cases, the user may select a button/tab or otherwise provide input, such as in a reacquisition region or window of the object-tracking interface, to request reacquisition by the system. If not, monitoring for such input continues at step 760. If a user input is received/detected at step 760, the method 700 continues at 770 with the system performing AI-based reacquisition, and this may involve processing video from cameras nearby the last active camera location (such as those in the peripheral or next-up camera set) using AI-driven metadata for the tracked object.

Then, at step 774, the method 700 involves displaying still images or other data (e.g., thumbnail imagery) from one or more cameras identified as providing a possible match for the tracked object in their past or present video streams to the user in the interface. At 778, the system monitors for receipt of a user selection of one of these cameras from step 774 as the new active camera or as including a verified match/hit on the tracked object. If no verification/selection is received at 778, the method 700 may continue at 770 with further reacquisition processing. If a verification/selection of a new camera is received, the method 700 may continue at 750 with updating the object-tracking interface using the new active camera that includes the reacquired object.

Although the invention has been described and illustrated with a certain degree of particularity, it is understood that the present disclosure has been made only by way of example, and that numerous changes in the combination and arrangement of parts can be resorted to by those skilled in the art without departing from the spirit and scope of the invention, as hereinafter claimed.

For example, the interface 500 shown in Figures 5 and 6 may be generated so as to include a camera view history. In other embodiments, the interface 500 will be configured to include camera- specific countdown timers for each camera based on the type of tracked object. The countdown timer will indicate, for example, when nearby (within a 100 yards up to several street blocks or more) cameras are anticipated to attain sight of the tracked object or when it will move into their field of vision. This time in the future may be calculated by the system I 00 based on a calculated speed of the tracked object along with its direction of travel (DOT) relative to the camera's location or orientation (e.g., field of view). The calculated speed will, of course, vary widely from vehicles down to a pedestrian's walking or running speed. The countdown clock, though, allows the user of the interface 500 to anticipate when they will have to make a decision to move to a next-up camera in the perimeter or halo set of cameras identified by the system 100 and provided via selectable icons in the interface 500.

## Claims

1. A crime center system, comprising:
a dispatch processing hub communicatively linked via a communications network with a plurality of client devices and a plurality of cameras; and
on the dispatch processing hub, an interface generator generating an object-tracking interface for display upon a display device of each of the client devices,
wherein the object-tracking interface is configured to include:
an active camera view window displaying video from a first one of the cameras designated as a first active camera, the video including an image of a tracked object; and
a peripheral region extending about an outer edge of the active camera view window, the peripheral region including icons each associated with one of the cameras in a peripheral camera set and the cameras in the peripheral camera set each having a physical location within a predefined distance from a physical location of the first active camera,
wherein the interface generator responds to user input selecting one of the icons as a second active camera by updating the object-tracking interface to display video from the camera in the peripheral camera set associated with the selected one of the icons in the active camera view window.

2. The system of claim 1, wherein the icons are positioned in the peripheral region to provide an indication of the physical locations of the cameras associated with the icons relative to the physical location of the first active camera.

3. The system of claim 1, wherein, in response to the user input, the interface generator modifies the peripheral camera set to include a subset of the cameras within the predefined distance from a physical location of the second active camera.

4. The system of claim 1, wherein the cameras in the peripheral camera set each have an orientation determined by the interface generator to provide a field of view useful in capturing images of the tracked object at a time when the tracked object travels out of view of the first active camera.

5. The system of claim 1, wherein the system further includes one or more software mechanisms for determining a direction of travel of the tracked object and wherein the object-tracking interface includes a map-based portion centered at the physical location of the first active camera and displaying user-selectable icons associated with a subset of the cameras determined to have physical locations along a route defined by the direction of travel.

6. The system of claim 5, wherein the user-selectable icons, when selected, cause the interface generator to make a camera associated with the selected icon the active camera and to modify the map-based portion to be re-centered at a physical location associated with the camera associated with the selected icon.

7. The system of claim 1, wherein the system further includes one or more software mechanisms for determining a direction of travel and a speed of the tracked object and for determining a time when the tracked object will move into view of one or more cameras positioned nearby to the first active camera based on the direction of travel and the speed of the tracked object and wherein the object-tracking interface includes a countdown clock providing an indicator of the time.

8. The system of claim 1, wherein the object-tracking interface includes a reacquisition portion displaying identifiers of one or more of the cameras that have feeds with an object providing a potential match to the tracked object and wherein the one or more of the cameras are determined by an AI-based tracked object reacquisition module in the system that processes the feeds using Al-driven meta attributes associated with the tracked object to determine potential matches.

9. The system of claim 8, wherein the AI-based tracked object reacquisition module only processes the feeds from cameras in the peripheral camera set.

10. An object-tracking method, comprising:
identifying an object in a video feed from a first camera to be tracked;
determining a set of additional cameras each having a physical location within a predefined 360-degree ring about a physical location of the first camera;
generating a graphical user interface including an active camera view window displaying a feed from the first camera and further including a peripheral region extending about an outer edge of the active camera view window and including an icon associated with each camera in the set of additional cameras, the icons associated with the cameras in the set of additional cameras being positioned in the peripheral region to provide an indication of physical positioning of the additional cameras to the first camera;
monitoring for user input selecting one of the icons in the peripheral region; and
when the user input is identified based on the monitoring, modifying the graphical user interface to provide a video feed from a second camera associated with the selected one of the icons in the active camera view window.

11. The method of claim 10, wherein the determining of the set of additional cameras further comprises processing orientations of the additional cameras for matches with one or more orientations providing fields of view for capturing images of the tracked object.

12. The method of claim 10, wherein generating the graphical user interface includes determining a direction of travel of the object, wherein the graphical user interface includes a map-based portion centered at the physical location of the first camera, and wherein the map-based portion includes at least one icon associated with one of the additional cameras with a physical position along a route of the object predicted based on the direction of travel.

13. The method of claim 12, further comprising monitoring the map-based portion for user selection of the at least one icon and, in response, modifying the graphical user interface to provide a video feed, in the active camera view window, from a camera associated with the at least one icon in the map-based portion.

14. The method of claim 13, further including, in response, modifying the map-based portion to be centered at the physical location of the camera associated with the at least one icon.

15. The method of claim 10, further comprising receiving a reacquisition request via the graphical user interface and, in response, processing video feeds from each camera in the set of additional cameras for a potential match to the object based on Al-driven meta attributes associated with the object.
